(19) Europäisches Patentamt
European Patent Office
Office européen des brevets

(11) **EP 3 805 697 A1**

(12) **EUROPEAN PATENT APPLICATION**

(43) Date of publication:
**14.04.2021 Bulletin 2021/15**

(51) Int Cl.:
**G01C 15/10** (2006.01)　　**G01B 5/30** (2006.01)
**G01C 15/00** (2006.01)

(21) Application number: **20193803.2**

(22) Date of filing: **01.09.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.09.2019　CN 201910894348**

(71) Applicant: **Central Research Institute Of Building And**
**Construction Co. Ltd. MCC Group**
**Beijing 100088 (CN)**

(72) Inventors:
• **SHEN, Tong**
　**Beijing, Beijing 100088 (CN)**
• **LI, Jiwa**
　**Beijing, Beijing 100088 (CN)**
• **RONG, Hua**
　**Beijing, beijing 100088 (CN)**

• **XU, Haixiang**
　**Beijing, Beijing 100088 (CN)**
• **ZHANG, Huidong**
　**Beijing, Beijing 100088 (CN)**
• **YANG, Lin**
　**Beijing, Beijing 100088 (CN)**
• **WU, Liquan**
　**Beijing, Beijing 100088 (CN)**
• **LIU, Kai**
　**Beijing, Beijing 100088 (CN)**
• **DONG, Yueliang**
　**Beijing, Beijing 100088 (CN)**
• **MA, Pengfei**
　**Beijing, Beijing 100088 (CN)**
• **LIU, Wuhua**
　**Beijing, Beijing 100088 (CN)**
• **ZHAO, Wei**
　**Beijing, Beijing 100088 (CN)**

(74) Representative: **Isern Patentes y Marcas S.L.**
　**Avda. Diagonal, 463 Bis, 2°**
　**08036 Barcelona (ES)**

(54) **PLUMB LINE BASED MULTI-POINT THREE-DIMENSIONAL DEFORMATION TEST SYSTEM AND TEST DATA PROCESSING METHOD THEREOF**

(57)　A plumb line-based multi-point three-dimensional deformation test system includes a plumb line drop tool disposed at the highest point of a to-be-tested structure, a plumb line hung on the plumb line drop tool, and a weight damping device connected to a bottom end of the plumb line. A plurality of deformation measuring and reading devices are disposed through the plumb line without touching it. The plurality of deformation measuring and reading devices are fastened at different elevation measurement points of a to-be-tested structure through their respective mounting frames. Each deformation measuring and reading device includes a horizontal deformation measuring and reading device and a vertical deformation measuring and reading device. The test system synchronously monitors the horizontal and vertical deformation of measurement points at multiple elevations in one direction, effectively reducing the system installation workload, monitoring costs, and space occupation. A method for processing test data of the plumb line-based multi-point three-dimensional deformation test system can be used to obtain the three-dimensional deformation values of measurement points of the to-be-tested structure at different elevations in a direction. System errors can be effectively reduced through multi-point measuring and reading.

FIG. 3

EP 3 805 697 A1

## Description

## TECHNICAL FIELD

The present invention relates to the technical field of structure monitoring in civil engineering, and in particular, to a plumb line-based multi-point three-dimensional deformation test system and a test data processing method thereof.

## BACKGROUND

In the prior art, plumb line-based vertical deformation test systems applied to containment structures of nuclear power plants or other large structures are all single-point measurement systems. A horizontal deformation test system is separated from a vertical deformation test system.

When performing measurement at different elevations in a certain direction of a large building structure, the existing measuring device requires a horizontal test system and a vertical test system at each elevation in the direction. In a plumb line-based horizontal deformation test system, only one reading device is disposed at the bottom of a plumb line protection tube. Therefore, one plumb line-based horizontal deformation monitoring system can monitor horizontal deformation for only one measurement point at one elevation in one direction. In a plumb line-based vertical deformation test system, a reading device is disposed at the bottom of a plumb line protection tube, and values are read manually by using a vernier caliper. Therefore, one plumb line-based vertical deformation monitoring system can monitor vertical deformation for only one measurement point at one elevation in one direction.

Therefore, the existing measuring device not only has a complicated system, occupies large space, but also provides very limited measuring and reading functions.

## SUMMARY

In order to resolve the prior-art problem that one plumb line-based horizontal or vertical deformation monitoring system can monitor horizontal or vertical deformation for only one measurement point at one elevation in one direction, the present invention proposes a test system that can implement three-dimensional synchronous monitoring on the horizontal and vertical deformation of measurement points at multiple elevations in one direction, as well as a method for processing test data of this test system.

The plumb line-based multi-point three-dimensional deformation test system according to the present invention can be applied to containment structures of nuclear power plants or other large structures, to replace the existing plumb line-based vertical and horizontal test systems.

The technical solutions of the present invention are as follows:

A plumb line-based multi-point three-dimensional deformation test system includes a plumb line drop tool disposed at the highest point of a to-be-tested structure, a plumb line hung on the plumb line drop tool, and a weight damping device connected to a bottom end of the plumb line, where along a test surface of the structure, a plurality of plumb line protection tubes, a plurality of protection tube mounting brackets, a plurality of horizontal deformation measuring and reading devices, and a plurality of vertical deformation measuring and reading devices are disposed alternately. Each protection tube mounting bracket is installed on the test surface of the structure and used to fasten the corresponding plumb line protection tube; between adjacent plumb line protection tubes, one horizontal deformation measuring and reading device and one vertical deformation measuring and reading device are installed for each specified elevation measurement point; and the vertical line passes through the plurality of plumb line protection tubes, the plurality of horizontal deformation measuring and reading devices, and the plurality of vertical deformation measuring and reading devices from top to bottom.

Further, the vertical deformation measuring and reading device includes a laser sensor carrying platform with a central through hole, laser sensor mounting plates, laser sensors, and vertical deformation measurement targets, where the laser sensor mounting plate is fastened at the lower part of the laser sensor carrying platform, the laser sensor is disposed on the laser sensor mounting plate, and the vertical deformation measurement target is disposed under the laser sensors; and the plumb line is routed through the central through hole of the laser sensor carrying platform and connected to the vertical deformation measurement target.

Further, a plurality of laser sensor mounting plates are evenly distributed on the lower part of the laser sensor carrying platform along a circumferential direction, with one laser sensor installed on each laser sensor mounting plate.

Further, the laser sensor carrying platform is a cylindrical structure with an upper connecting plate and a lower connecting plate.

Further, the vertical deformation measurement target includes ring screws, a target disc adjusting bolt, a connecting sleeve, and a vertical measurement target disc, where the target disc adjusting bolt passes through the connecting sleeve with internal threads, and is threadedly connected to the ring screws in the upper and lower parts, and the vertical measurement target disc is fastened on the connecting sleeve.

Further, the weight damping device includes a damping barrel, a damping cover, a weight, a telescopic tube, and a damping fluid, where the damping cover is located directly above the damping barrel without touching the damping barrel; the telescopic tube is routed through the center of the damping cover from the outside, tightened, extended into the damping barrel, and threadedly connected to the weight in the damping barrel; and the weight is placed in the damping fluid without touching the damping barrel.

Further, a lower end of the telescopic tube is threadedly connected to the weight in the damping barrel through a double threaded connecting rod.

Further, the horizontal deformation measuring and reading device and the vertical deformation measuring and reading device collect horizontal monitoring data and vertical monitoring data through a data collector.

The present invention further provides a method for processing test data of the plumb line-based multi-point three-dimensional deformation test system, including the following steps:

S1. data collection
Synchronously collecting horizontal monitoring data and vertical monitoring data read by the horizontal and vertical deformation measuring and reading devices at different elevation measurement points of the to-be-tested structure;

S2. data conversion
Transferring the horizontal and vertical monitoring data obtained in step S1 to the data collector, and monitoring in real time the horizontal and vertical monitoring data at different elevations of the to-be-tested structure at different times;

S3. data processing
Processing the horizontal and vertical monitoring data obtained in step S2 to obtain more accurate deformation data.

Further, a method for the data processing in step S3 is as follows:

(1) At different elevations of the to-be-tested structure, the measurement points are numbered D1, D2, D3, D4, D5, ..., Dn from bottom to top, where D1 is a bottom measurement point and also a reference point, Dn is a top measurement point, and radial horizontal and vertical deformation occur after the deformation of the measurement points of the to-be-tested structure;

(2) At different elevations of the to-be-tested structure, radial horizontal and vertical deformation occur after the deformation of the measurement points D1, D2, D3, D4, D5, ..., Dn from bottom to top, where the horizontal measurement points are sequentially numbered $H_{D1}$, $H_{D2}$, $H_{D3}$, ..., $H_{Dn}$, and the vertical measurement points are sequentially numbered $V_{D1}$, $V_{D2}$, $V_{D3}$, ..., VDn;

(3) horizontal deformation data processing

Extending a plumb line from the highest measurement point to the lowest measurement point, and installing the horizontal deformation measuring and reading device for the highest measurement point at the lowest point; since $H_{Dm1}$ is a horizontal deformation value of the highest point, then HDan=HDmi;

$$H_{Dai}=H_{Dm1}-H_{Dmi}$$

Where $H_{Dm1}$ is a measured radial deformation value of the reference point, in mm; $H_{Dai}$ is a horizontal deformation value of the i-th point, in mm; and $H_{Dmi}$ is a measured horizontal deformation value of the i-th point, in mm;

(4) vertical deformation data processing

Extending a plumb line from the highest measurement point to the lowest measurement point, and installing the vertical deformation measuring and reading device for the highest measurement point at the lowest point; since $V_{Dm1}$ is a measured vertical deformation value of the highest point, $V_{Dm1}$ is the vertical deformation value of the highest point,

$$V_{Dai}=V_{Dm1}-V_{Dmi}$$

Where $V_{Dm1}$ is the measured vertical deformation value of the highest point, in mm; $V_{Dai}$ is a vertical deformation value of the i-th point, in mm; $V_{Dmi}$ is a measured vertical deformation value of the i-th point, in mm; and $V_{Dmi}$ is the measured data read by the vertical deformation measuring and reading device for each measuring point.

Compared with the prior art, the present invention has the following advantages and beneficial technical effects:

The plumb line-based multi-point three-dimensional deformation test system according to the present invention uses a multi-tube plumb line measurement device to synchronously monitor the horizontal and vertical deformation of measurement points at multiple elevations in one direction, so as to obtain three-dimensional deformation values of the measurement points at different elevations in one direction of a to-be-tested structure. This system can replace the existing plumb line-based vertical and horizontal test systems, to overcome the defects of the existing monitoring device such as complicated systems, occupation of large area, and very limited measuring and reading functions, and greatly reduce the system installation workload and monitoring costs. The system also improves the accuracy by replacing manual microscope reading with numerically-controlled data acquisition. In addition, the test data processing method proposed by the present invention can effectively reduce system errors through multi-point measuring and reading.

## BRIEF DESCRIPTION OF DRAWINGS

FIG. 1 is a schematic diagram of the overall installation layout of a plumb line-based multi-point three-dimensional deformation test system according to the present invention.

FIG. 2 is a partial enlargement diagram of the installation layout of a plumb line-based multi-point three-dimensional deformation test system according to the present invention.

FIG. 3 is a 3D view of a vertical deformation measuring and reading device according to the present invention.

FIG. 4 is a front view of a vertical deformation measuring and reading device according to the present invention.

FIG. 5 is a front view of a vertical deformation measurement target according to the present invention.

FIG. 6 is a sectional view of a vertical deformation measurement target according to the present invention.

FIG. 7 is a front view of a weight damping device according to the present invention.

FIG. 8 is an exploded view of a weight damping device according to the present invention.

FIG. 9 is a sectional view of a weight damping device according to the present invention.

FIG. 10 is a schematic diagram of horizontal and vertical deformation generated after deformation of measurement points.

FIG. 11 is a schematic exploded view of horizontal and vertical deformation.

FIG. 12 is a schematic diagram of a method for processing horizontal deformation measurement points.

FIG. 13 is a schematic diagram of a method for processing vertical deformation measurement points.

In the figure, 1. plumb line drop tool, 2. plumb line protection tube, 3. protection tube mounting bracket, 4. plumb line, 5. horizontal deformation measuring and reading device, 6. vertical deformation measuring and reading device, 7. connecting sleeve, 8. weight damping device, 9. mounting frame, 61. laser sensor carrying platform, 62. laser sensor mounting plate, 63. laser sensor, 64. vertical deformation measurement target, 641. ring screw, 642. target disc adjusting bolt, 643. connecting sleeve, 644. vertical measurement target disc, 81. bolt buckle, 82. damping cover, 83. telescopic tube, 84. double threaded connecting rod, 85. weight, 86. damping barrel, and 87. damping fluid.

## DETAILED DESCRIPTION

The specific implementations of the present invention are described below with reference to the accompanying drawings.

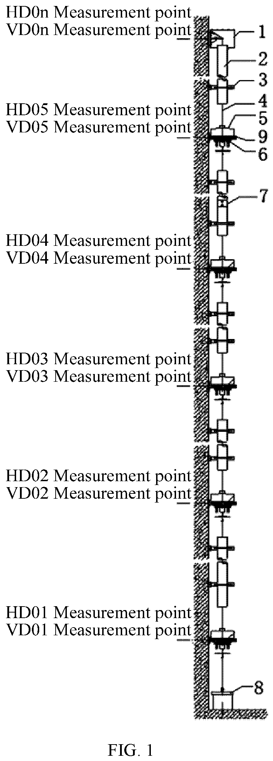

As shown in FIG. 1, a plumb line-based multi-point three-dimensional deformation test system provided by the present invention includes a plumb line drop tool 1, a plurality of plumb line protection tubes 2, a plurality of protection tube mounting brackets 3, a plumb line 4, a plurality of horizontal deformation measuring and reading devices 5, a plurality of vertical deformation measuring and reading devices 6, a plurality of connecting sleeves 7, and a weight damping device 8.

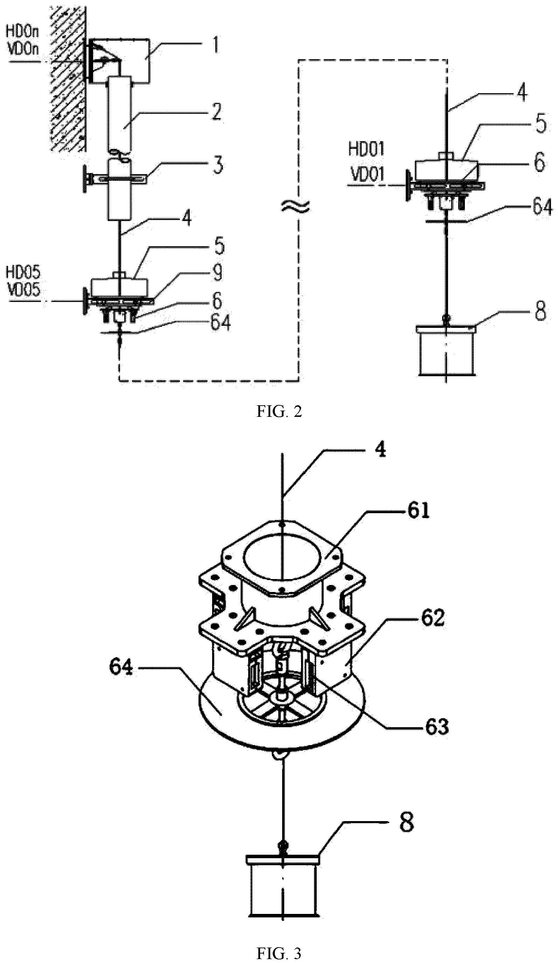

As shown in FIG. 1 and FIG. 2, the plumb line drop tool 1 is installed at the highest point of a to-be-tested structure, and the plumb line 4 is hung on the plumb line drop tool 1. Each protection tube mounting bracket 3 is installed on a test surface of the to-be-tested structure, and the corresponding plumb line protection tube 2 is fastened at each protection tube mounting bracket 3. The plumb line protection tubes 2 are connected by the connecting sleeves 7, to protect the plumb line. Between adjacent plumb line protection tubes 2, one deformation measuring and reading device is installed through the mounting frame 9 for measurements points at different specified elevations. Each deformation measuring and reading device includes a horizontal deformation measuring and reading device 5 and a vertical deformation measuring and reading device 6. The plumb line 4 is connected to the weight damping device 8 at the bottom (near the ground) through the plurality of plumb line protection tubes 2, the plurality of horizontal deformation measuring and reading devices 5, and the plurality of vertical deformation measuring and reading devices 6 from the top down. Particularly, the plumb line 4 is not in contact with any deformation measuring and reading device or any plumb line protection tube. The weight damping device 8 is in a free state. The weight damping device 8 ensures that the plumb line 4 is perpendicular.

The horizontal deformation measuring and reading device 5 and the vertical deformation measuring and reading device 6 are respectively used to read the horizontal and vertical deformation at corresponding elevation measurement points. A central through hole with a diameter of not less than 60 mm is reserved in the middle of each horizontal deformation measuring and reading device 5 and each vertical deformation measuring and reading device 6 to ensure that the plumb line 4 can pass through the central through hole without touching any wall of the hole. A size of the central through hole varies with to-be-tested structures or ranges.

In the present invention, the horizontal deformation measuring and reading device and vertical deformation measuring and reading device invented by the applicant " Central Research Institute of Building and Construction Co., Ltd." can be used. However, the present invention is not limited thereto. Any measuring and reading device capable of horizontal and vertical deformation measuring and reading can be applied to the test system and test data processing method of the present invention.

The specific structures of the vertical deformation measuring and reading device and the horizontal deformation measuring and reading device used in the present invention are described below.

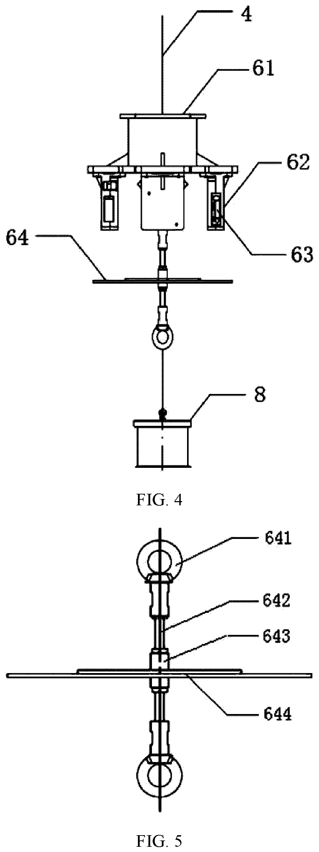

The vertical deformation measuring and reading device 6 of the present invention includes a laser sensor carrying platform 61 with a central through hole, laser sensor mounting plates 62, laser sensors 63, and vertical deformation measurement targets 64. As shown in FIG. 3 and FIG. 4, the laser sensor mounting plate 62 is fastened to the lower part of the laser sensor carrying platform 61 through connecting pieces (such as bolts), the laser sensor 63 is disposed on the laser sensor mounting plate 62, and the vertical deformation measurement target 64 is disposed under the laser sensor mounting plate 62 without touching the laser sensor mounting plate 62. The plumb line 4 is routed through the central through hole of the laser sensor carrying platform 61 and connected to a ring screw on the upper part of the vertical deformation measurement target 64. A ring screw on the lower part of the vertical deformation measurement target 64 can be connected to the weight damping device 8. To ensure the accuracy of the measurement data, a plurality of laser sensor mounting plates 62 are evenly distributed on the lower part of the laser sensor carrying platform 61 along a circumferential direction, with one laser sensor 63 installed on each laser sensor mounting plate 62. The number of laser sensors can be adjusted as required. The more laser sensors, the more accurate the measurement results. The average value of the measurement results of a plurality of laser sensors can eliminate the problem that the vertical deformation measurement target is not perpendicular, thereby improving the accuracy of the deformation measurement of large buildings or structures. The test result of the laser sensor is accurate to 0.01 mm. The laser sensor carrying platform 61 of the present invention is a cylindrical structure with an upper plate and a lower plate, making the installation easier.

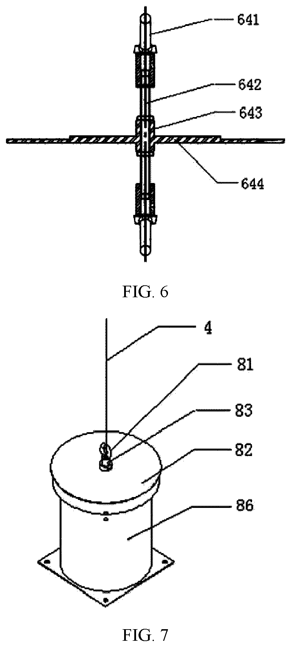

As shown in FIG. 5 and FIG. 6, the vertical deformation measurement target 64 of the present invention includes ring screws 641, a target disc adjusting bolt 642, a connecting sleeve 643, and a vertical measurement target disc 644. The target disc adjusting bolt 642 passes through the connecting sleeve 643 with internal threads, and is threadedly connected to the ring screws 641 in the upper and lower parts, and the vertical measurement target disc 644 is fastened on the connecting sleeve 643. Because the target disc adjusting bolt 642 is threadedly connected to the connecting sleeve 643, the vertical measurement target disc 644 can be adjusted along the target disc adjusting bolt 642 within a certain height range. After the position of the vertical measurement target disc 644 is determined, the connecting sleeve 643 is fastened. When a to-be-tested object has a vertical deformation, the plumb line drives the vertical measurement target disc to move up and down. After the vertical measurement target disc stops moving, the laser sensor reads a distance between a reference point to the vertical measurement target disc.

It can be seen that the non-contact vertical deformation measuring and reading device for the plumb line-based vertical deformation test system is simple in structure, and various parts can be disassembled and assembled easily. This greatly reduces the onsite workload and makes the operations much easier.

The horizontal deformation measuring and reading device 5 used in the present invention includes a deformation sensor protection cover with a central through hole, and a deformation sensor disposed in the deformation sensor protection cover. The deformation sensor protection cover is fastened on a test surface of the to-be-tested structure through the mounting frame 9. When the to-be-tested object has a horizontal deformation, a difference between a value measured by the deformation sensor and a value of the reference point is the horizontal deformation of the measurement point.

The specific structure of the weight damping device used in the present invention is described below.

FIG. 7, FIG. 8, and FIG. 9 are a front view, a perspective view, and a sectional view of a weight damping device according to the present invention.

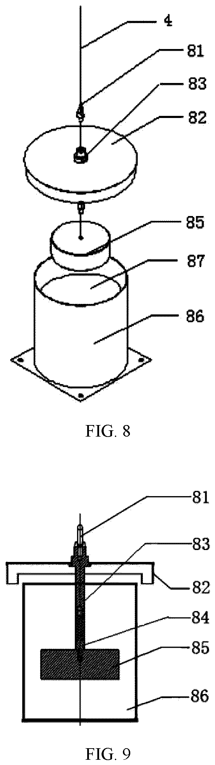

As shown in FIG. 7 to FIG. 9, the weight damping device 8 for the deformation test systems of nuclear power plants or large structures provided by the present invention includes a bolt buckle 81, a damping cover 82, a telescopic tube 83, a double threaded connecting rod 84, a weight 85, and a damping barrel 86. The damping cover 82 is located directly above the damping barrel 86, without touching the damping barrel 86. The telescopic tube 83 is routed through the center of the damping cover 82 from the outside, tightened, and extended into the damping barrel 86. A lower end of the telescopic tube 83 is threadedly connected to the weight 85 through the double threaded connecting rod 84. The bolt buckle 81 is tightened on an upper end of the telescopic tube 83, and the plumb line is connected to the bolt buckle 81. The damping barrel 86 contains a damping fluid 87. Preferably, the damping fluid 87 should fill 2/3 of the damping barrel 86. The damping fluid 87 must submerge the upper surface of the weight 85, as shown in FIG. 8.

A vertical position of the weight 85 can be adjusted by adjusting the double threaded connecting rod 84 at the lower end of the telescopic tube 83. The weight 85 is in the damping fluid 87 without touching the bottom and inner wall of the damping barrel 86.

An outer diameter of the damping cover 82 is larger than an outer diameter of the damping barrel 86, as shown in FIG. 9. When the condensed water slides down along the plumb line 4, it first drops on the upper surface of the damping cover 82 and then directly drops to the ground along its edge, instead of dropping into the damping barrel 86. Preventing the condensed water from dropping into the damping barrel effectively prevents overflow of the damping fluid, thereby avoiding the failure of the damping barrel.

There is a uniform gap between the damping cover and the damping barrel. The horizontal position of the damping barrel can be adjusted to ensure the required measurement range.

The weight damping device is located at the bottom of the plumb line-based deformation test system, to keep the plumb line vertical, and makes the weight quickly reach an equilibrium state through the damping fluid.

It should be noted that the weight damping device is not limited to nuclear power projects, but can also be applied to other plumb line-based measurement devices.

In summary, the present invention uses one plumb line as a measurement reference. The plumb line moves with the deformation of the measurement point at the highest elevation on the test surface of the to-be-tested structure, and the measuring and reading devices for other elevation measurement points can obtain the corresponding meter readings. An actual deformation value at each elevation measurement point can be obtained by comparing a corresponding reading with a reading of a measuring and reading device installed at the lowest point (the measured radial deformation value of the reference point). No measuring and reading device is installed at the highest point of the to-be-tested structure, and its actual deformation value is the same as the measured deformation value of the reference point.

A method for processing test data of the plumb line-based multi-point three-dimensional deformation test system is described below. The processing method includes the following steps.

S1. Data collection

Synchronously collect horizontal monitoring data and vertical monitoring data read by the horizontal and vertical deformation measuring and reading devices at different elevation measurement points of a to-be-tested structure.

S2. Data conversion

Transfer the horizontal and vertical monitoring data obtained in step S1 to a data collector, and monitor in real time the horizontal and vertical monitoring data at different elevations of the to-be-tested structure at different times.

S3. Data processing

Process the horizontal and vertical monitoring data obtained in step S2 to obtain more accurate deformation data.

The specific method for data processing in step S3 is as follows:

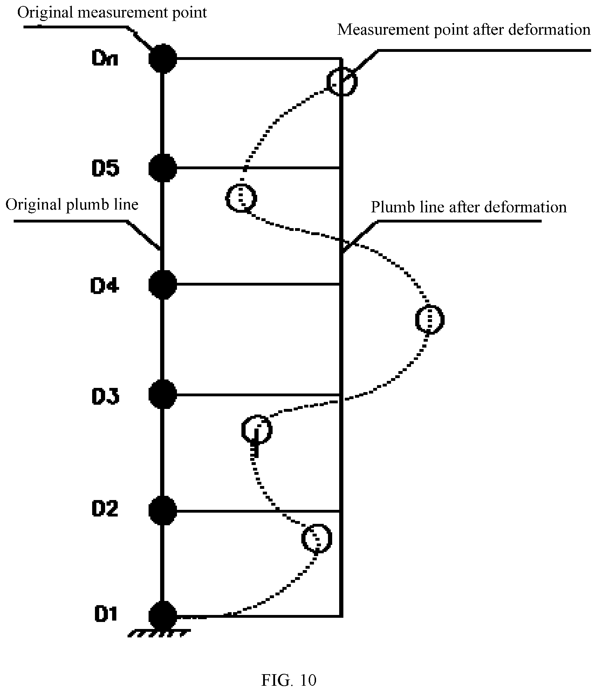

(1) At different elevations of the to-be-tested structure, the measurement points are numbered D1, D2, D3, D4, D5, ..., Dn from bottom to top, where D1 is a bottom measurement point and also a reference point, and Dn is a top measurement point. Radial horizontal and vertical deformation occur after the deformation of the measurement points of the to-be-tested structure, as shown in FIG. 10.

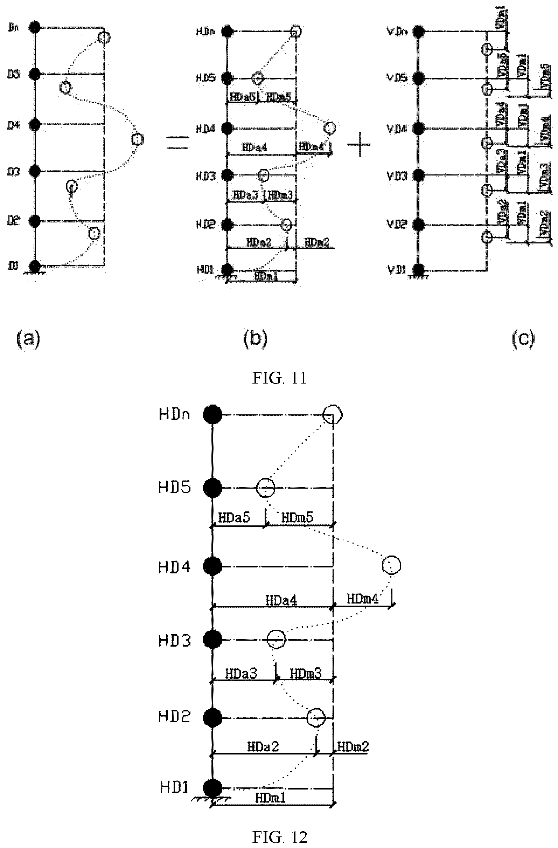

(2) At different elevations of the to-be-tested structure, radial horizontal and vertical deformation occur after the deformation of the measurement points D1, D2, D3, D4, D5, ..., Dn from bottom to top. The horizontal measurement points are sequentially numbered $H_{D1}$, $H_{D2}$, $H_{D3}$, ..., $H_{Dn}$, and the vertical measurement points are sequentially numbered $V_{D1}$, $V_{D2}$, $V_{D3}$, ..., $V_{Dn}$, as shown in FIG. 11.

(3) Horizontal deformation data processing

Extend a plumb line from the highest measurement point to the lowest measurement point, and install the horizontal deformation measuring and reading device for the highest measurement point at the lowest point. Since $H_{Dm1}$ is a horizontal deformation value of the highest point, then HDan=HDm1.

$$H_{Dai} = H_{Dm1} - H_{Dmi}$$

$H_{Dm1}$ is a measured radial deformation value of the reference point, in mm; $H_{Dai}$ is a horizontal deformation value of the i-th point, in mm; and $H_{Dmi}$ is a measured horizontal deformation value of the i-th point, in mm. $H_{Dmi}$ is the measured data read by the horizontal deformation measuring and reading device for each measurement point. The data can be positive or negative, as shown in FIG. 12.

(4) Vertical deformation data processing

Extend a plumb line from the highest measurement point to the lowest measurement point, and install the vertical deformation measuring and reading device of the highest measurement point at the lowest point. Since $V_{Dm1}$ is a measured vertical deformation value of the highest point, $V_{Dm1}$ is the vertical deformation value of the highest point.

$$V_{Dai}=V_{Dm1}-V_{Dmi}$$

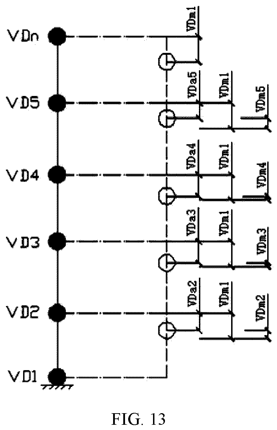

$V_{Dm1}$ is the measured vertical deformation value of the highest point, in mm; $V_{Dai}$ is a vertical deformation value of the i-th point, in mm; and $V_{Dmi}$ is a measured vertical deformation value of the i-th point, in mm. $V_{Dmi}$ is the measured data read by the vertical deformation measuring and reading device for each measurement point. The data can be positive or negative, as shown in FIG. 13.

In short, in FIG. 11, the horizontal deformation and vertical deformation in part (a) are broken down into the horizontal deformation in part (b) and the vertical deformation in part (c). FIG. 10 shows the horizontal deformation and vertical deformation in part (a). FIG. 12 shows the horizontal deformation in part (b). FIG. 13 shows the vertical deformation in part (c).

The horizontal deformation measuring and reading device and the vertical deformation measuring and reading device of the present invention both use cables to transmit measurement data. This can improve the stability and accuracy of data transmission and avoid the defects of wireless data transmission such as the vulnerability to interference and limited transmission distance.

The plumb line-based multi-point three-dimensional deformation test system according to the present invention uses a multi-tube plumb line measurement device to synchronously monitor the horizontal and vertical deformation of measurement points at multiple elevations in one direction. This greatly reduces the system installation workload and monitoring costs. The measuring and reading devices measure the horizontal and vertical deformation data of the to-be-tested structure at different elevations in one direction. According to the data processing method provided by the present invention, the three-dimensional deformation values of measurement points of the to-be-tested structure at different elevations in a direction can be obtained, and system errors can be effectively reduced through multi-point measuring and reading.

The present invention is not limited to specific component sizes, and any technical solution obtained by any modification or equivalent replacement according to the inventive concept and design principle of the present invention shall fall within the protection scope of the present invention.

**Claims**

1. A plumb line-based multi-point three-dimensional deformation test system, comprising a plumb line drop tool (1) disposed at the highest point of a to-be-tested structure, a plumb line (4) hung on the plumb line drop tool (1), and a weight damping device (8) connected to a bottom end of the plumb line (4), wherein along a test surface of the structure, a plurality of plumb line protection tubes (2), a plurality of protection tube mounting brackets (3), a plurality of horizontal deformation measuring and reading devices (5), and a plurality of vertical deformation measuring and reading devices (6) are disposed alternately, wherein each protection tube mounting bracket (3) is installed on the test surface of the structure and used to fasten the corresponding plumb line protection tube (2); between adjacent plumb line protection tubes (2), one horizontal deformation measuring and reading device (5) and one vertical deformation measuring and reading device (6) are installed for each specified elevation measurement point; and the vertical line (4) passes through the plurality of plumb line protection tubes (2), the plurality of horizontal deformation measuring and reading devices (5), and the plurality of vertical deformation measuring and reading devices (6) from top to bottom.

2. The plumb line-based multi-point three-dimensional deformation test system according to claim 1, wherein the vertical deformation measuring and reading device (6) comprises a laser sensor carrying platform (61) with a central through hole, laser sensor mounting plates (62), laser sensors (63), and vertical deformation measurement targets (64), wherein the laser sensor mounting plate (62) is fastened at the lower part of the laser sensor carrying platform (61), the laser sensor (63) is disposed on the laser sensor mounting plate (62), and the vertical deformation measurement target (64) is disposed under the laser sensor mounting plate (62); and the plumb line is routed through the central through hole of the laser sensor carrying platform (61) and connected to the vertical deformation measurement target (64).

3. The according to claim 2, wherein a plurality of laser sensor mounting plates (62) are evenly distributed on the lower part of the laser sensor carrying platform (61) along a circumferential direction, with one laser sensor (63) installed on each laser sensor mounting plate (62).

4. The according to claim 3, wherein the laser sensor carrying platform (61) is a cylindrical structure with an upper connecting plate and a lower connecting plate.

5. The according to claim 4, wherein the vertical deformation measurement target (64) comprises ring screws (641), a target disc adjusting bolt (642), a connecting sleeve (643), and a vertical measurement target disc (644), wherein the target disc adjusting bolt (642) passes through the connecting sleeve (643) with internal threads, and is threadedly connected to the ring screws (641) in the upper and lower parts, and the vertical measurement target disc (644) is fastened on the connecting sleeve (643).

6. The according to claim 5, wherein the weight damping device (8) comprises a damping barrel (86), a damping cover (82), a weight (85), a telescopic tube (83), and a damping fluid (87), wherein the damping cover (82) is located directly above the damping barrel (86) without touching the damping barrel (86); the telescopic tube (83) is routed through the center of the damping cover (82) from the outside, tightened, extended into the damping barrel (86), and threadedly connected to the weight (85) in the damping barrel (86); and the weight (85) is placed in the damping fluid (87) without touching the damping barrel (86).

7. The according to claim 6, wherein a lower end of the telescopic tube (83) is threadedly connected to the weight (85) in the damping barrel (86) through a double threaded connecting rod (84).

8. The plumb line-based multi-point three-dimensional deformation test system according to any one of claims 1 to 7, wherein the horizontal deformation measuring and reading device (5) and the vertical deformation measuring and reading device (6) collect horizontal monitoring data and vertical monitoring data through a data collector.

9. A method for processing test data of the plumb line-based multi-point three-dimensional deformation test system according to any one of claims 1 to 8, comprising the following steps:

S1. data collection
synchronously collecting horizontal monitoring data and vertical monitoring data read by the horizontal and vertical deformation measuring and reading devices at different elevation measurement points of the to-be-tested structure;
S2. data conversion
transferring the horizontal and vertical monitoring data obtained in step S1 to the data collector, and monitoring in real time the horizontal and vertical monitoring data at different elevations of the to-be-tested structure at different times;
S3. data processing
processing the horizontal and vertical monitoring data obtained in step S2 to obtain more accurate deformation data.

10. The method for processing test data of the plumb line-based multi-point three-dimensional deformation test system according to claim 9, wherein a method for the data processing in step S3 is as follows:

(1) at different elevations of the to-be-tested structure, the measurement points are numbered D1, D2, D3, D4, D5, ..., Dn from bottom to top, wherein D1 is a bottom measurement point and also a reference point, Dn is a top measurement point, and radial horizontal and vertical deformation occur after the deformation of the measurement points of the to-be-tested structure;

(2) at different elevations of the to-be-tested structure, radial horizontal and vertical deformation occur after the deformation of the measurement points D1, D2, D3, D4, D5, ..., Dn from bottom to top, wherein the horizontal measurement points are sequentially numbered $H_{D1}$, $H_{D2}$, $H_{D3}$, ..., $H_{Dn}$, and the vertical measurement points are sequentially numbered $V_{D1}$, $V_{D2}$, VD3, ..., VDn;

(3) horizontal deformation data processing
extending a plumb line from the highest measurement point to the lowest measurement point, and installing the horizontal deformation measuring and reading device for the highest measurement point at the lowest point; since $H_{Dm1}$ is a horizontal deformation value of the highest point, then HDan=HDmi;

$$H_{Dai} = H_{Dm1} - H_{Dmi}$$

wherein $H_{Dm1}$ is a measured radial deformation value of the reference point, in mm; $H_{Dai}$ is a horizontal deformation value of the i-th point, in mm; and $H_{Dmi}$ is a measured horizontal deformation value of the i-th point, in mm;

(4) vertical deformation data processing
extending a plumb line from the highest measurement point to the lowest measurement point, and installing the vertical deformation measuring and reading device for the highest measurement point at the lowest point; since $V_{Dm1}$ is a measured vertical deformation value of the highest point, $V_{Dm1}$ is the vertical deformation value of the highest point,

$$V_{Dai} = V_{Dm1} - V_{Dmi}$$

wherein $V_{Dm1}$ is the measured vertical deformation value of the highest point, in mm; $V_{Dai}$ is a vertical deformation value of the i-th point, in mm; $V_{Dmi}$ is a measured vertical deformation value of the i-th point, in mm; and $V_{Dmi}$ is the measured data read by the vertical deformation measuring and reading device for each measuring point.

HD0n Measurement point
VD0n Measurement point

HD05 Measurement point
VD05 Measurement point

HD04 Measurement point
VD04 Measurement point

HD03 Measurement point
VD03 Measurement point

HD02 Measurement point
VD02 Measurement point

HD01 Measurement point
VD01 Measurement point

1
2
3
4
5
9
6

7

8

FIG. 1

FIG. 2

FIG. 3

FIG. 4

FIG. 5

FIG. 6

FIG. 7

FIG. 8

FIG. 9

Original measurement point

Measurement point after deformation

**Dn**

**D5**

Original plumb line

Plumb line after deformation

**D4**

**D3**

**D2**

**D1**

FIG. 10

FIG. 11

(a)          (b)          (c)

FIG. 12

FIG. 13

Europäisches
Patentamt

European
Patent Office

Office européen
des brevets

## EUROPEAN SEARCH REPORT

Application Number

EP 20 19 3803

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Brys Henryk ET AL: "THE SYSTEM OF AUTOMATIC LASER PLUMB-LINE FOR MONITORING A HEAVY DAM WALL", , 27 December 2011 (2011-12-27), XP055780527, Retrieved from the Internet: URL:http://yadda.icm.edu.pl/yadda/element/bwmeta1.element.baztech-article-PWAB-0036-0005/c/Brys.pdf [retrieved on 2021-03-01] | 1,8-10 | INV. G01C15/10 G01B5/30 G01C15/00 |
| A | * Section 2 * * figures 1, 2, 4, 5 * ----- | 3-7 | |
| A | CN 108 253 949 A (UNIV XIAN POSTS & TELECOMMUNICATIONS) 6 July 2018 (2018-07-06) * the whole document * ----- | 1-10 | |

| | | | TECHNICAL FIELDS SEARCHED (IPC) |
|---|---|---|---|
| | | | G01C G01B G01S |

The present search report has been drawn up for all claims

| Place of search | Date of completion of the search | Examiner |
|---|---|---|
| The Hague | 1 March 2021 | Hanigk, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 19 3803

This annex lists the patent family members relating to the patent documents cited in  the above-mentioned European search report.
The members are as contained in the European Patent Office EDP file on
The European Patent Office is in no way liable for these particulars which are merely given for the purpose of information.

01-03-2021

| Patent document cited in search report | Publication date | Patent family member(s) | Publication date |
|---|---|---|---|
| CN 108253949 A | 06-07-2018 | NONE | |

For more details about this annex : see Official Journal of the European Patent Office, No. 12/82